# EUROPEAN PATENT APPLICATION

(11) **EP 1 154 377 A1**
(43) Date of publication of application: **14.11.2001**
(21) Application number: 99937062.0
(22) Date of filing: 12.08.1999
(51) Int. Cl.: G06T 1/00

(54) **PEN TYPE INPUT DEVICE WITH CAMERA**

(30) Priority: 31.08.1998 JP 24469098
(71) Applicant: Hitachi, Ltd., Chiyoda-ku, Tokyo 101-8010 (JP); HITACHI VIA MECHANICS, Ltd., Ebina-Shi, Kanagawa 243-0488 (JP)
(72) Inventor: ARAI, Toshifumi, Hitachi Res. Lab. Hitachi Ltd., Hitachi-shi, Ibaraki 319-1292 (JP); MACHII, Kimiyoshi, Hitachi Res. Lab. Hitachi Ltd., Hitachi-shi, Ibaraki 319-1292 (JP); KATSURA, Koyo, Hitachi Res. Lab. Hitachi Ltd., Hitachi-shi, Ibaraki 319-1292 (JP); WATANABE, Hideyuki, Hitachi Res. Lab. Hitachi Ltd., Hitachi-shi, Ibaraki 319-1292 (JP)
(74) Representative: Beetz & Partner Patentanwälte
(86) International application number: PCT/JP99/04391
(87) International publication number: WO 00/13141

(57) **Abstract**

Disclosed is a pen type input device with a camera which is improved usability, by improving construction of the device. The pen type input device with the camera is construction adapting for both of horizontally elongated and vertically elongated object. On the other hand, means for pointing the object and the process content simultaneously, and further means for detecting the user pointing the object in erroneous manner and teaching correct manner of teaching of the object depending thereon are provided.

## Description

### TECHNICAL FIELD

The present invention relates to a pen type input device with a camera with improved usability. More particularly, the invention relates to a pen type input device employing as a user interface permitting a user to easily call out function of an information processing apparatus. Namely, the invention relates to handy image input device to be used in the information processing apparatus.

### BACKGROUND ART

As a prior art relating to a pen type input device with a camera, there is a MEMO-PEN disclosed in ACM PRESS, HUMAN FACTORS IN COMPUTING SYSTEMS, CHI 95 Conference Companion, p256 - P257. The MEMO-PEN is incorporates a compact camera embedded in a penholder to continuously pick-up image in the vicinity of a penpoint across the penpoint to record a handwriting. An area to be picked-up by the camera of the MEMO-PEN is limited to a quite narrow region required for making judgment of direction of handwriting.

In the MEMO-PEN, since the camera is embedded in the penholder, a visual field of the camera is interfered by a hand of the user unless an optical system has to be arranged at a position inclined toward the penpoint from a portion to be gripped by the hand of the user. Therefore, even if the optical system having wide visual field is used, there is a limitation of distance to place the optical system away from an object (paper). Therefore, the wide visual field of the camera cannot be established. On the other hand, in the condition where the user naturally holds the pen, the penholder is usually inclined significantly from up-right position. Therefore, an image to be picked up by the camera is a cross shot of the image.

A function of the MEMO-PEN is to store the handwriting of the user written by the MEMO-PEN to reproduce the handwriting under the aid of some information processing apparatus or to recognize characters. Namely, during collection of the handwriting data, in other words, while the user uses the MEMO-PEN, user interface to call out the function of the information processing apparatus using the pen-type input device with the camera would never be executed. Accordingly, kind of process to be applied for processing object (handwriting) during input is not designated by the pen. Furthermore, in case of the MEMO-PEN, since the pen pointer and the position of the handwriting constantly match with each other, it is not necessary to adjust positional relationship between input object (handwriting) and the penpoint.

As the prior art relating to the pen-type input device with the camera, there is a system called as PaperLink disclosed in ACM PRESS, HUMAN FACTORS IN COMPUTING SYSTEMS, CHI 97 CONFERENCE PROCEEDINGS, P327 - p334. In the PaperLink, as a device with which the user inputs a process object, a pen-type input device mounting a compact camera. The compact camera is located at a position looking down the object (paper surface) from right above in the condition where the user naturally holds the pen. The visual field of the camera can be set so that an area of several cm square around the penpoint. The picked-up image around the penpoint is input to the information processing apparatus to execute various processes depending upon the content. If the input object is known, the predetermined process depending thereupon is executed. For example, predetermined file is opened to present to the user or execution of the predetermined program is initiated. On the other hand, if the input object is not known, it is temporarily stored to be used as an argument to the command to be executed later.

A problem to be solved by the present invention is to degrade usability in the device for inputting an object using an image by loading the compact camera on the pen-type device.

Another problem in the MEMO-PEN, since the camera including the optical system is built in the penholder, it is difficult to provide wide visual field for the camera.

Concerning the foregoing PaperLink, since an axis of the pen and center axis of the camera are arranged on the same plain, longitudinally elongated pattern cannot be pointed by natural operation.

Furthermore, in the input device of the PaperLink, since means for pointing the object is only one kind, it cannot be possible to designate the process object and kind of process simultaneously.

Also, if the user makes designation object and the penpoint in the construction where the camera looks down the penpoint from the above as in the PaperLink, the designation object is hidden by the penpoint to make it impossible to make accurate input.

On the other hand, since the penpoint and the designation object cannot be overlapped as set forth above, it becomes necessary to reflect favor of the user in the method for designating the object. Namely, in the pen-type input device with the camera, a relationship between the position of the designation object and the position of the penpoint is variable depending upon favor of designation method of the user. For example, when the user designates a laterally elongated object, some user may points the center portion, and another user may points lower right position. On the other hand, tilt angle of the pen upon pointing the object may be variable at different users.

### DISCLOSURE OF THE INVENTION

An object of the present invention is to provide a pen type input device with a camera which can improve usability.

In order to accomplish the foregoing object, the present invention is provided with the following means.

In the present invention, upon installing the camera on the pen, a center axis of the camera is arranged offsetting from a center of the pen. When a user points a vertically elongated object from right side, the camera is arranged at left side than a penholder. By this, the penholder will never be placed between the camera and the object to be hindrance. Conversely, When a user points a vertically elongated object from left side, the camera is arranged at right side than a penholder. On the other hand, in place of fixing the camera offsetting toward left or right, a construction may be taken to offset toward left or right with pivoting the camera toward left and right within a range from 0° to 90° .

On the other hand, a compact camera or a portion of the pen installed the same is provided with a process designating device for designating kind of process to be applied for the pointed object. The process designating device may be a mechanism for switching color of penpoint in a multi-color ball point pen, for example. By preliminarily setting a predetermined process by the process designating device, the process can be activated simultaneously with pointing of the process object. The process designating device may be a device varying shape or color of the penpoint. Since the penpoint is for pointing the object, the user may watch the shape or color of the penpoint corresponding to the kind pf process with capturing the pointing object in a visual field.

On the other hand, pointing manner teaching means for teaching correct manner of pointing for the user is provided and incorrect pointing detection means for detecting incorrect manner of pointing of the object of the user is provided. The incorrect pointing detection means may make judgment of incorrect manner of pointing of the object by the user when a region of the detected object and a region where the penpoint appears overlap, for example. On the other hand, when extraction of the object failed continuously for a predetermined times, judgment may be made that manner of pointing the object of the user is not correct.

Furthermore, in order to set the favor upon pointing the object using the pen type input device with the camera by the user, pointing error correcting means may be provided. The pointing error correcting means is different from parallax error means in a typical tablet display, and is means for registering favor of the user concerning positional relationship between the pen type input device with the camera and the object pointed by the same.

### BRIEF DESCRIPTION OF THE DRAWINGS

Fig. 1 is an illustration showing a construction of an overall system employing a video pen
Fig. 2 is an illustration showing a construction of the video pen;
Fig. 3 is an illustration showing the video pen as viewed from the above;
Fig. 4 is an illustration showing one example of an image picked-up a line in a horizontal writing document by means of a video pen;
Fig. 5 is an illustration showing one example of an image picked-up a line in a vertical writing document by means of a video pen;
Fig. 6 is an illustration showing a construction of the video pen for left-handed as viewed from the above;
Fig. 7 is an illustration for quantative discussion for shifting amount of the camera of the video pen;
Fig. 8 is an illustration showing an example of a shape of a penpoint requiring extremely small shifting amount of the camera of the video pen;
Fig. 9 is an illustration showing a construction of the video pen;
Fig. 10 is an illustration showing a video pen as viewed from the above (setting for horizontal writing);
Fig. 11 is an illustration showing a video pen as viewed from the above (setting for vertical writing);
Fig. 12 is an illustration showing one example of an image picked up a horizontally elongated object in a setting for horizontal writing;
Fig. 13 is an illustration showing one example of an image picked up a vertically elongated object in a setting for vertical writing;
Fig. 14 is an illustration showing an overall construction of a process designating device;
Fig. 15 is an illustration showing one example of the case when an erroneous object is designated by the video pen;
Fig. 16 is an illustration showing an example detecting overlapping of the penpoint and the object after extraction of the object;
Fig. 17 is an illustration showing one example of a screen teaching a manner of pointing;
Fig. 18 is an illustration showing one example of a message displaying pointing correction means;
Fig. 19 is an illustration showing one example of a sheet used for pointing correction;
Fig. 20 is an illustration showing one example of an image picked-up a standard pattern for pointing correction;
Fig. 21 is an illustration showing an internal construction of an image processing apparatus;
Fig. 22 is an illustration showing an example of the case where a horizontally elongated object as one example of a binary image;
Fig. 23 is an illustration showing one example of a value for pointing correction;
Fig. 24 is an illustration for explaining a pointing correction data;
Fig. 25 is an illustration for explaining object extraction;
Fig. 26 is an illustration showing one example of an image of the extracted object;
Fig. 27 is an illustration for explaining a tilt correction;
Fig. 28 is an illustration showing one example of an image of object after tilt correction;
Fig. 29 is an illustration showing one example of a characteristic amount;
Fig. 30 is an illustration showing one example of a structure of a pattern dictionary;
Fig. 31 is an illustration showing one example of a structure of a process table;

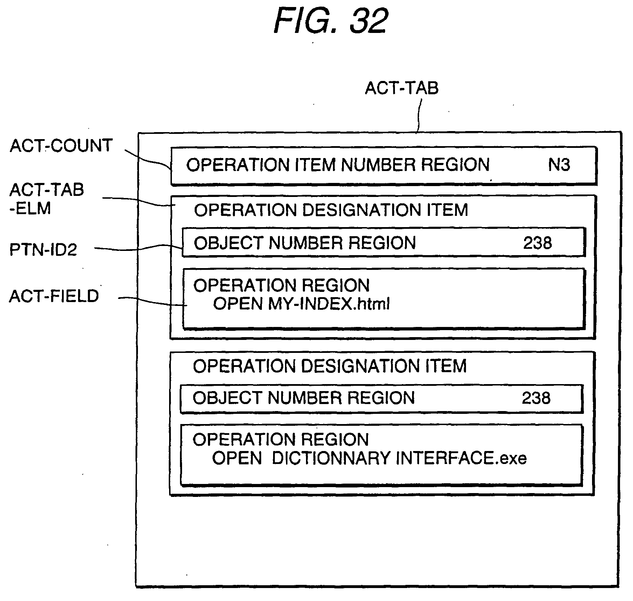

Fig. 32 is an illustration showing one example of a structure of a operation table; and
Fig. 33 is an illustration showing one example of a display image of the information processing apparatus.

### BEST MODE FOR IMPLEMENTING THE INVENTION

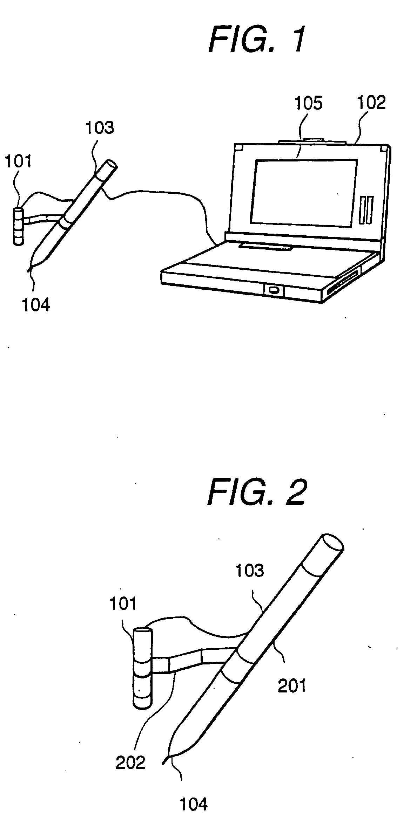

Fig. 1 shows one example of a hardware construction for implementing the present invention. A user may input data to an information processing apparatus 102 and executes a command of the information processing apparatus 102 employing a pen type input device mounting a compact camera 101.

Such pen type input device with the camera will be referred hereinafter as a video pen 103. When a user points something by the video pen 103, a switch mounted at the tip end of the video pen 103, namely a penpoint switch 104, is turned ON. The information processing apparatus 102 is responsive to turning ON of the penpoint switch 104 to take the image from the camera 101 of the video pen 103 to execute various process depending upon the content. For example, a line in a document is extracted from the image, subject to character recognition and transfers to a dictionary program. Then, the result is displayed on a display 105.

Fig. 2 shows one example of a structure of the video pen 103. A penholder 201 is a portion to be gripped by the user. A penpoint switch 104 is mounted on the tip end of the penholder 201. The tip end of the penpoint switch 104 is bar-shaped configuration. When the user points the object by the video pen 103, the bar is pushed into the penholder 201 to turn ON the electrical contact. To the penholder 201, the camera 101 is mounted so as to pick-up image around the tip end portion of the video pen 103. The camera is mounted on the penholder 103 by a camera holding member 202. The camera 101 is mounted at a position to vertically look down a portion around the tip end as much as possible when the user holds the video pen in a manner holding the pen. As the camera 101, a commercially available compact video camera may be used. The compact vide camera employing a 1/4 inches image pick-up element has a circular cross-section less than or equal to 1 cm in diameter, a length of about several cm. On the other hand, the penholder 201 is circular bar-shaped cross-section about 1 cm in diameter similarly to typical pen.

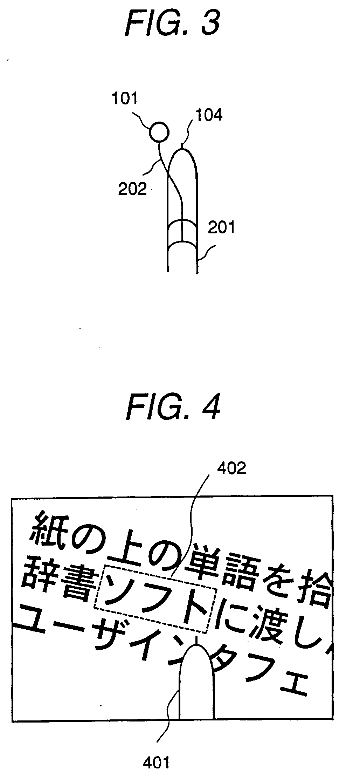

Fig. 3 shows a case looking down from the right above with raising the video pen 103 in the same condition as that the user holds the same. In the case, since the camera 101 is arranged in vertical direction, it can be seen in circular form as in the cross-section. Here, the point to notice is that the penholder 201 and the camera 101 are arranged on the same plain. The camera 101 is arranged offsetting upper left direction from the plain on which the penholder 201 falls. Upon pointing the line of the vertical document by the video pen 103, this is for consideration for preventing the objective line from being hidden by the penholder 201.

Fig. 4 shows an example of the image of the picked up line in the horizontal writing document by the video pin 103 shown in Fig. 2. A penpoint 401 of the video pen 103 appears at a position slightly offset to lower right direction from the center of the image. On the other hand, at a center portion, objective pattern 402 pointed by the user is picked up.

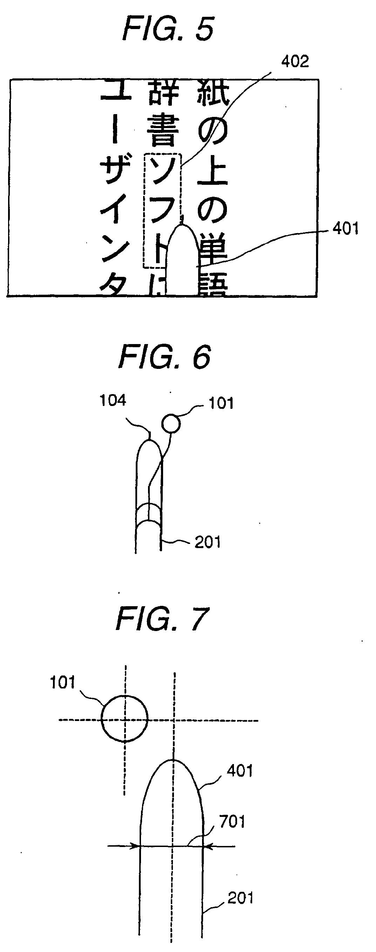

On the other hand, Fig. 5 shows an example of the image of the line in the vertical writing document picked up by the video pen 103 shown in Fig. 2, similarly. The penpoint 401 of the video pen 103 appears at the same position as that in Fig. 4. This is natural since the positional relationship of the camera 101 and the penholder 201 is fixed. In Fig. 5, the objective pattern 501 appears to extend vertically at the center of the image. At this time, since the camera 101 is arranged offsetting toward left from the penholder 201, the penholder 201 never interferes the camera to hide the objective pattern 501 in the vertical writing document.

Fig. 6 shows a method for installing the camera upon forming the video pen 103 for left handed similarly to Fig. 3. In the video pen 103 shown in Fig. 3 is premised in right handed operation and is assumed to point the vertically elongated object by right hand from right side. In order to point the vertically elongated object by left hand from left side, the camera 101 may be installed offsetting toward right from the penholder 201. By this, even when the vertically elongated object is pointed from the left side by the video pen 103, the object will never be hidden by the penholder 201.

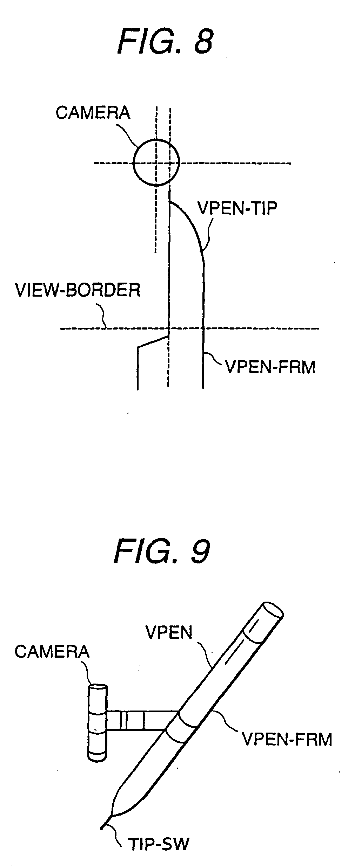

Fig. 7 shows how much offset from the center plain of the penholder 201 is required for the camera 101. So as not ho hide the vertically elongated object by the penholder 201, the camera 101 has to be offset in a magnitude greater than or equal to half of the thickness 701 of the penholder 201 at the portion picked up by the camera. However, in certain shape of the penpoint 401, the smaller offset magnitude can be sufficient. For example, when the penpoint 401 in a range appearing in the image of the camera is the shape as illustrated in Fig. 8, the offset magnitude can be greater than or equal to 0. Accordingly, offset magnitude of the camera may be adjusted so that the offset magnitude is greater than the width of the portion of the penholder 201 in a range appearing in the image of the camera inclined toward the object to be pointed that the center line of the penholder 201.

Fig. 9 shows another example of the structure of the video pen 103. A portion of the pen holder 201 is the same as that shown in Fig. 2 but is differentiated in mounting method of the camera 101.

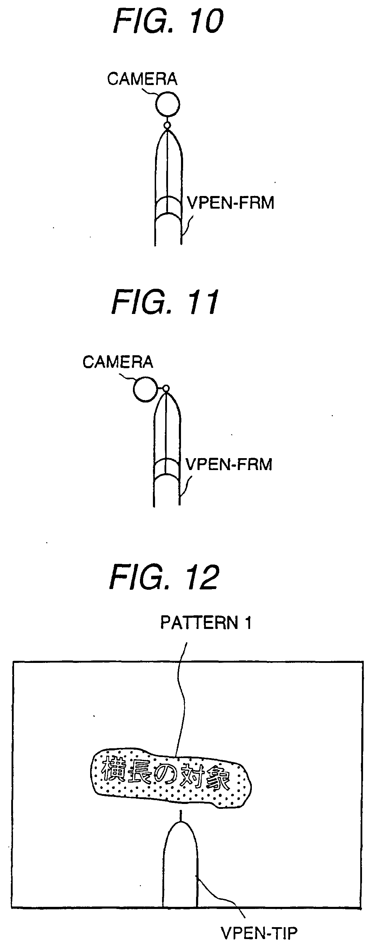

Fig. 10 shows a case looking down from the right above with raising the video pen 103 shown in Fig. 9 in the same condition as that the user holds the same. In this case, different from the case of Fig. 3, the camera 101 is arranged on the same plain with the penholder 201. Accordingly, there would be raised no problem in pointing the object in horizontal writing. However, upon pointing the vertically elongated object, such as line of the vertical writing document, the pen-holder interferes.

For solving this, in the video pen 103 shown in Fig. 9, camera 101 is shifted toward left with rotating over 90° with respect to the penholder 201. Fig. 11 shows a condition locking down the camera 101 offsetting toward left with rotation. The camera holding member 202 is bent at the intermediate position, and the camera is rotated over 90° to swing out toward left. In this condition, upon pointing the vertically elongated object, the penholder 201 will never hide the object.

Fig. 12 shows one example of the image picked up the horizontally elongated object in the condition of Fig. 10. There is no significant difference as the case of Fig. 4 except for the position appearing the penpoint 401 being slightly lower side of the center of the image. Namely, upon pointing the horizontally elongated object, it can be said that the video pen 103 shown in Fig. 2 and the video pen 103 of Fig. 9 has little difference upon pointing the horizontally elongated object.

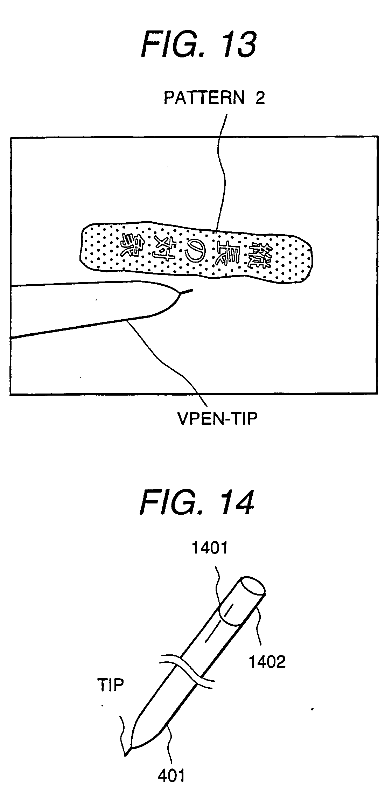

On the other hand, Fig. 13 shows one example of the image picked up the vertically elongated object in the condition of Fig. 11. In this case, since the camera 101 is rotated over 90° , the penpoint 401 appears at lower left side of the center of the image. On the other hand, the vertically elongated object appears as elongated in horizontal direction of the image. The image picked-up by the commercially available video camera is typically elongated in horizontal direction. In the construction of the video pen 103 shown in Fig. 9. even upon pointing the vertically elongated object, the image of the image pick-up element can be used effectively.

Namely, upon pointing the vertically elongated object by the video pen 103 shown in Fig. 2, only object falls within shorter sides of the image as shown in Fig. 4. However, in case of the video pen 103 shown in Fig. 9, it becomes possible to input the object falls within the longer sides of the image as shown in Fig. 13.

The video pen 103 shown in Fig. 9 encounters in that, upon pointing the vertically elongated object, the user has to change the arrangement of he camera 101. Accordingly it is desirable to employ the construction shown in Fig. 2 when resolution and image pick-up range of the camera is sufficiently large, to employ the construction shown in Fig. 9 otherwise.

In the construction of the video pen 103 shown in Fig. 9, so that the information processing apparatus 102 may make judgment whether the object is horizontally elongated or vertically elongated, it becomes necessary to read where the camera 101 of the video pen 103 is set. This may be done by electrically read the condition of the camera holding member 202 or by making judgment from the picked-up image. Namely, by checking where the penpoint 401 appears in the image, the position of the camera 101 can be identified. If the penpoint 402 appears at central lower side of the image as shown in Fig. 12, it is the case where the horizontally elongated object is picked up. On the other hand, when the penpoint 401 appears at lower left side of the image as shown in Fig. 13, it is the case where the vertically elongated object is pointed from right side. Also, when the penpoint 401 appears at lower right side of the image, it is the case where the vertically elongated object is pointed from left side.

In the portion of the penholder 201 of the video pen 103, a process designating device 1401 for designating kind of the process to be applied for the pointed object is provided. The process designating device 1401 is such a mechanism for switching pen color in a multi-color ball pointed pen, for example. The user selects a color corresponding to the process to be activated by rotating a rotary portion 1402 at the upper end of the penholder 201.

By preliminarily setting the predetermined process by the process designating device 1401, the user may activate the process simultaneously with designation of the object to be processed. The process designation device 1401 may also vary shape or color of the penpoint 401. Since the penpoint 401 is the portion to point the object, the user may watch the shape or color of the penpoint 401 corresponding to the kind of process with watching the object to point.

For reading condition of the process designating device , namely which one of pens is selected, a construction employing electrical contacts may be considered, for example. In such case, upon turning ON of the penpoint switch 401, the condition of the processing device 1401 may be read out.

On the other hand, since the penpoint 401 falls within the visual field of the camera 101, it may be possible to identify the kind of the process by image processing without using particular electric signal upon processing the image from the camera 101. Since the positional relationship between the penpoint 401 and the camera is known, the position of the penpoint 401, particularly the pen in the input image from the camera 101 can be calculated preliminarily. During process of the image processing, by checking the color present at the current position, kind of the currently selected process can be easily discriminated.

In a user interface method according to the present invention, the user inputs the process object to the information processing apparatus 102 by an image using the video pen 103. Accordingly, in order to accurately input the process object, it becomes necessary to acquire the correct object designation method by the video pen 103. Namely, the penpoint 401 of the video pen 103 should not hide the object and the penpoint 401 and the object should not be too distant.

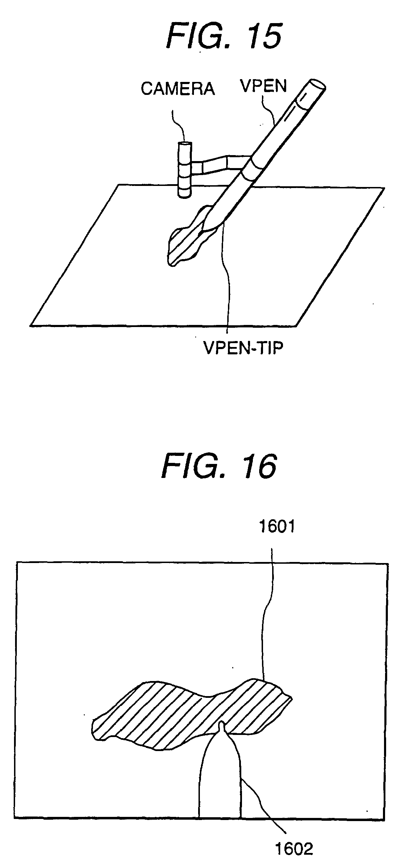

The user using the video pen 103 at the first time tends to overlap the penpoint 401 over the object as shown in Fig. 15. This condition will not creates a problem when the object to be pointed is displayed imager of the system, such as a pen input computer and has means for input coordinates on the display pointed by the pen. However, in the user interface method as in the present invention, when the pointed object is extracted from the image by picking up the portion around the penpoint 401, it should be significant problem to be hidden the pointing object by the penpoint 401.

As set forth above, for a measure in the case where user places the penpoint 401 overlapping with the object, it becomes necessary means for teaching manner of pointing by detecting occurrence of overlapping placement of the penpoint over the object and teaching the correct manner of pointing.

Overlapping of the penpoint 401 and the pointing object can be detected in the following manner. Namely, a region extracted as object and a region where the penpoint 401 should appear are compared to make judgment that the user placed the penpoint overlapping with the object if both have overlapping portion. Fig. 16 shows one example where a region 1601 extracted as object and the projection 1602 of the penpoint 401 overlap. The region where the penpoint 201 can be derived preliminarily since the positional relationship between the penholder 201 and the camera is known. Upon detection that the user overlaps the penpoint 401, a teaching display of teaching the user the correct manner of pointing the object is displayed. it is also possible to display the teaching display of the manner of pointing when the failure of extraction of the object is failed in series for the predetermined times, for example, three times.

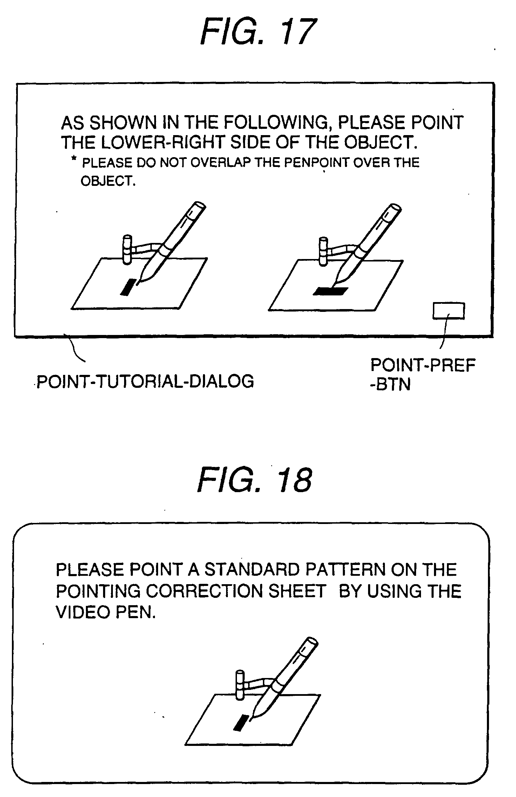

Fig. 17 shows one example of a teaching image to be displayed on a display 105 of the information processing apparatus 102. The pointing manner teaching image teaches to the user to point several mm lower side in case of the horizontally elongated object and several mm horizontally right side in case of the vertically elongated object.

On the other hand, in the pointing manner teaching image, a pointing correction button 1701 is provided for calling the pointing correcting means which will be discussed later.

When the user points the object by means of the video pen 103, manner of pointing is variable in each individual. For example, upon pointing the horizontally elongated object, some user may point the lower side of the center of the object, and another user may point lower right side of the object. Also, the tilt angle of the pen relative to the object may be variable in each user. For example, upon pointing the horizontally elongated object, some user may point the object from right below, and another user may point the object from the lower right. Furthermore, distance from the object to be pointed and the penpoint 401 may be variable per user. For example, upon pointing the horizontally elongated object, some user may point immediately lower side of the object and another user may point the position about 1 cm below the object.

As set forth above, different of manner of pointing of the object depending on the user has to be reflected to parameter upon extraction of the object pointed by the user. Also, in some case, it may become necessary for adjusting positional relationship between the penholder 201 of the video pen 103 and the camera 101. Then, in the user interface method according to the present invention, there is provided means for preliminarily registering difference of pointing by the user (hereby referred to as "pointing"). This means will be referred to as pointing correction means.

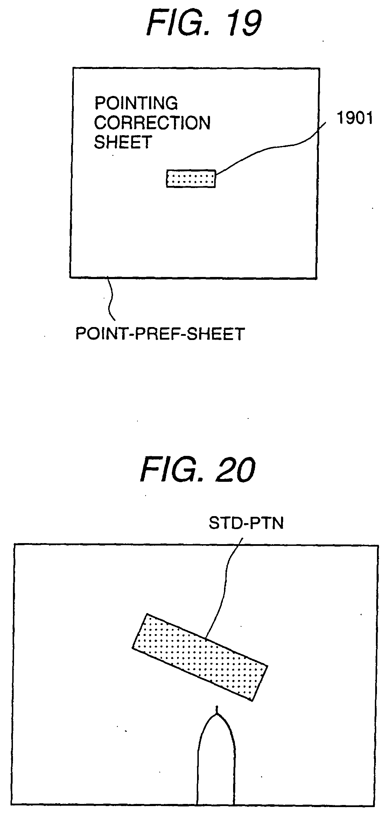

Upon activating the user interface method according to the present invention at first, the pointing correction means is called upon depression of the pointing correction button 1701 set forth above, and so forth. The user may register his favor by means of the pointing correction means in the following matter, for example. When the user activates the pointing correction means , a message showing in Fig. 18 is displayed on the display 105. According to the message, the user points the object on pointing correction sheet shown in Fig. 19 by means of the video pen 103. The pointing correction sheet is simple paper printed the horizontally elongated object. The object, shape and the size of the standard pattern 1901 are preliminarily registered in the information processing apparatus 102.

When the user points the standard pattern 1901 by means of the video pen 103, the image shown in Fig. 20 is obtained as the input image. The information processing apparatus 102 read out information what portion of the object, the user pointed by the penpoint 401, and what angle, the penholder 201 is tilted upon pointing by performing image processing for the image. The favor of the user relating to designation of the object thus read out is used as a reference value upon extraction of the object to be processed from the input image by the information processing apparatus 102.

In the shown embodiment, a distance between the object and the position pointed by the user (object minimum distance) and tilting (standard tilting) of the video pen 103 are registered as user's favor. Manner of deriving those will be discussed in detail later together with discussion for object extracting portion of the information processing apparatus 102.

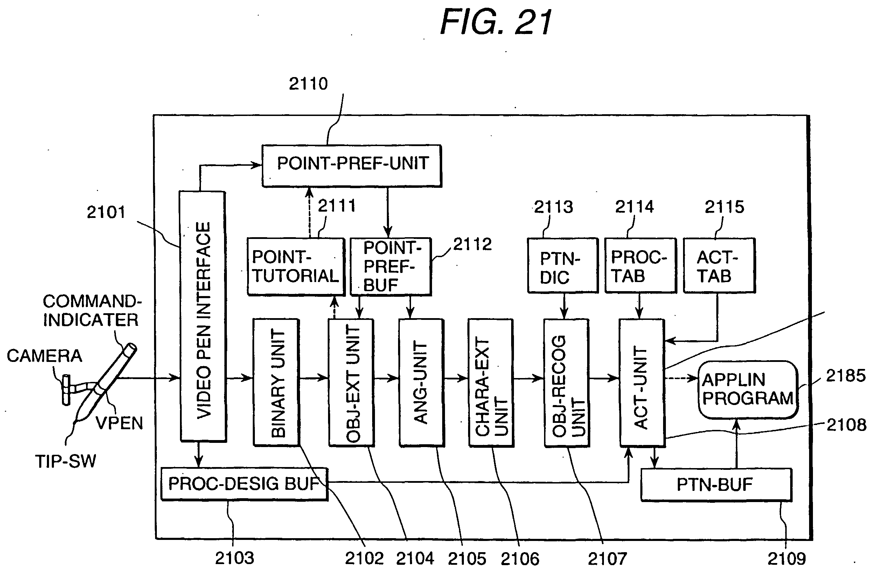

Fig. 21 shows one example of the overall construction for implementing the present invention, and illustrates particular internal construction of the information processing apparatus 102. Hereinafter, operation of respective components will be discussed.

### (1) Video Pen Interface 2101

When the user points the object to input by the video pen 103, the penpoint switch 104 mounted at the tip end of the video pen 103 is turned ON. The video pen interface 2101 detects turning ON of the penpoint switch 104 to take one frame of image from the camera 101 to transfer to a binarizing portion 2102. The image transferred to the binarizing portion 2102 is a color image having 320 dots in horizontal direction and 240 dots in vertical direction and in color number of 24 bits per one pixel.

On the other hand, the video pen interface 2101 reads in the condition of the process designating device 1401 attached to the video pen 103 to write in the process designating buffer 2103. Data written in the process designating buffer 2103 is number of the pen selected by the process designating device 1401, for example. However, when number is 0, it represents the condition that no process is designated.

### (2) Binarizing Portion 2102

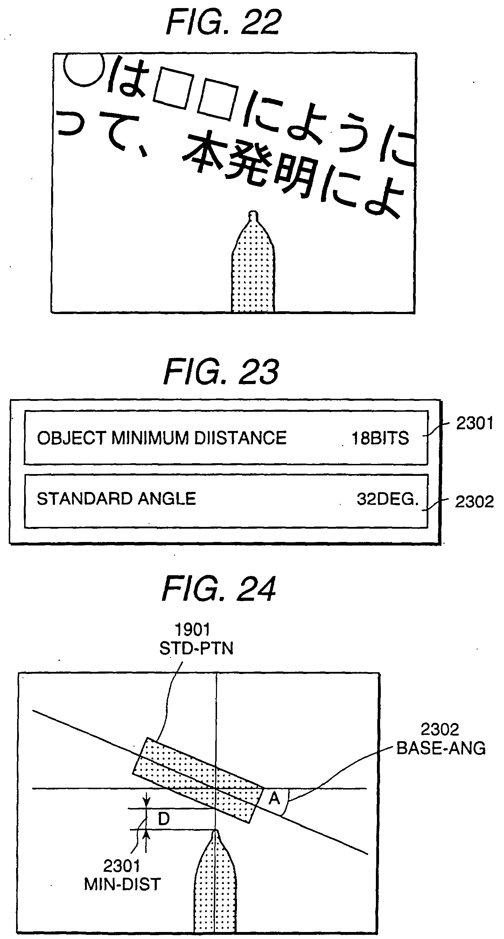

The binarizing portion 2102 converts the input image into binary image and transfers the resultant binary image to an object extracting portion 2104. Fig. 22 shows one example of the binarized image transferred top the object extracting portion 2104.

It should be noted that in the construction where the condition of the process designating device 1401 cannot be read out from the electrical contact, in advance of binarization of the input image, color of the region where the pen appears is checked to determined what color of pen is selected to write the number of pen selected in the process designation buffer 2103.

### (3) Object Extracting Portion 2104

The object extracting portion 2104 is a portion for extracting the process object from the binarized image transferred from the binarized portion 2102. In the transferred binarized image, various matters other than object appears. For example, penpoint 401 appears and matters written near the object may also appear, The function of the object extracting portion 2104 extracts only object from the transferred binarized image. The image is transferred to a tilt correcting portion 2105.

Favor when the user points the object, is stored in the pointing correction buffer 2112. The content of the pointing correction buffer 2112 is a set of values shown in Fig. 23, namely a set of object minimum distance 2301 and a standard tilt 2302. The object minimum distance 2301 is derived with reference to how much distance is provided between the penpoint 401 and the object when the user points the standard pattern 1901. The object minimum distance 2301 can be can be set as a length (number of dots) of line segment D in Fig. 24, for example. Also, the reference tilt 2302 is a value expressing how much the user tilts the video pen 103, and can determine the magnitude of the tilt A in Fig. 24, for example. An initial value of the object minimum distance 2301 is 20, for example, and the initial value of the standard tilt 2302 is 0, for example. In case of Fig. 24, the object minimum distance 2301 is 18 dots and the standard tilt 2302 is 32° .

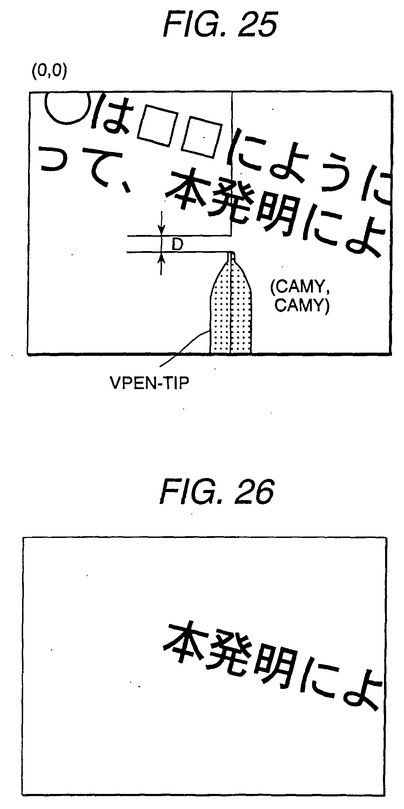

A process, in which the object extracting portion 2104 extracts the object from the binary image will be discussed with reference to Fig. 25 It should be noted that, in the following discussion, the coordinate system in the image has origin at upper left position. On the other hand, the constants used in the following discussion are CAMX representing X coordinate of the penpoint 401 in the image, CAMY representing Y coordinate and D representing object minimum distance 2301. Since the positional relationship between the penholder 201 and the camera 101 is known, CAMX and CAMY are values derived preliminarily. D is a value which can be read out from the pointing correction buffer 2112 as set forth above.

At first, the object extracting portion 2104 searches the image of the object from the a point S (CAMX, CAMY-D) offsetting upwardly in the magnitude of D from coordinate (CAMX, CAMY) of the penpoint 401. Namely, along the line segment L in Fig. 25, the image of the object is searched. At this stage, if any pixel considered as belonging in the object cannot be found, extraction of the object fails. Here, found pixel of the object is stored as the object region.

Next, the object extracting portion 2104 checks around the object region and takes the pixel within a predetermined distance from the object region in new object region. The predetermined distance is 10 dots, for example. Associating with this process, the object region is gradually expanded. The object extracting portion 2104 terminates expansion process at a timing where no further pixel to be taken is present. At a timing where the expansion process is terminated, aggregate of the pixels stored as the object region is judged as object pointed by the user.

At a timing where the object extracting portion 2104 completes extraction of the object, the extracted object region and the region where the penpoint 401 appears are compared. When both have overlapping portion, judgment can be made that the user placed the penpoint 401 overlapping with the object. For example, it is the case shown in Fig. 16. Accordingly, in such case, pointing manner teaching image is presented to the user to teach the correct object pointing method. Also, if extraction of the object is failed continuously, the pointing manner teaching image is presented to the user to teach the correct object pointing method.

For example, when the foregoing method is applied to the binarized image shown in Fig. 22, a pattern shown in Fig. 26 is extracted as object. The image as result of extraction is transferred to tilt correcting portion 2105.

### (4) Tilt Correcting Portion 2105

The tilt correcting portion 2105 is for calculation of tilt of the object from the image of the object transferred from the object extracting portion 2104 and correction thereof.

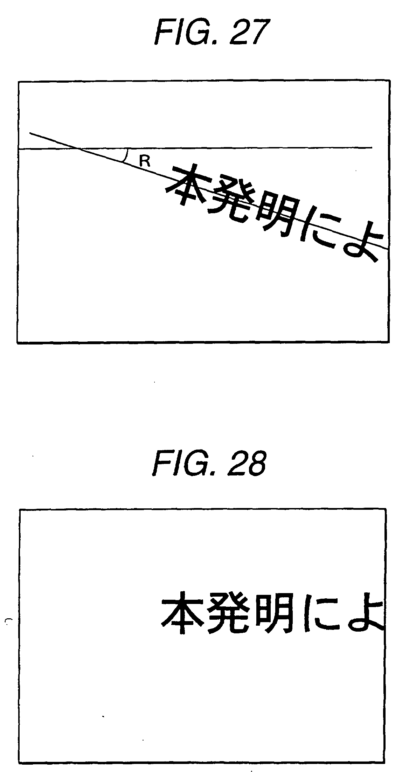

At first, the tilt correcting portion 2105 calculates tilt of the main axis of the received object. An angle R in Fig. 27 is a tilt of the main axis. In the case of the shown example, the tilt is -28°. This is the tilt of the object in the image picked up by the camera 101.

Next, the tilt correcting portion 2105 calculates a tilt of the object relative to the paper, on which the object is written on the basis of the tilt of the main axis calculated as set forth above and the value of the standard tilt in the pointing correcting buffer 2112. This tilt will be referred to as actual tilt in the following disclosure. Particularly, sum of the tilt of the object in the image and the value of the standard tilt becomes actual tilt. In the shown embodiment, since the tilt of the object in the image is -28° and the standard tilt is 32° , the actual tilt derived therefrom is 4° .

When the actual tilt is in a range close to 0, e.g. from -45° to 45° , the tilt correcting portion 2105 makes judgment that the object is horizontally elongated to rotate the image of the object so that the tilt of the main axis pf the image becomes 0. Accordingly, in case of the example set forth above, the image is rotated over -28° . The image of the object after rotation is shown in Fig. 28. Conversely, when the actual tile is out of the range set forth above, the tilt correcting portion 2105 makes judgment that the object is vertically elongated, the image of the object is rotated so that the tilt of the main axis of the image becomes 90° .

The tilt correcting portion 2105 transfers the image of the object corrected the tile as completed the foregoing process, to a characteristics extracting portion 2106. On the other hand, the image of the object corrected the tilt is stored in an object holding portion. The object holding portion holds the image and if already held image is present, it is abandoned.

### (5) Characteristics Extracting Portion 2106

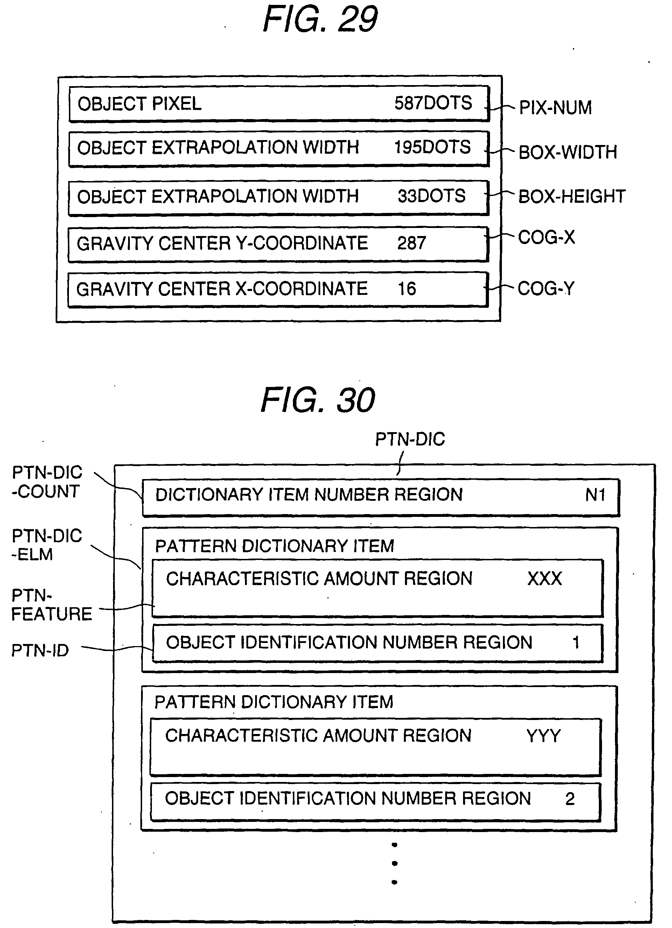

The characteristics extracting portion 2106 is for extracting the characteristic amount from the image of the object fed from the tilt correcting portion 2105. The characteristic amount may be pixel number included in the object, size of externally inserted rectangle, gravity center position and so forth. These characteristic amounts are used for identifying the object later. One example of the characteristic amount is shown in Fig. 29. An object pixel number PIX-NUM, an object external insertion width BOX-WIDTH, an object external insertion height BOX-HEIGHT, a gravity center X coordinate COG-X, a gravity center Y coordinate COG-Y and so forth form characteristic amount. These values are all integer.

The characteristic amount extracted by the characteristics extracting portion 2106 is transferred to an object recognizing portion 2107.

### (6) Object Recognizing Portion 2107

The object recognizing portion 2107 is a portion for making judgment whether the object in currently process is registered or not, using the characteristic amount transferred from the characteristics extracting portion 2106.

The object recognizing portion 2107 compares a plurality of the characteristic amounts registered in a pattern dictionary 2113 and a characteristic amount transferred from the characteristics extracting portion 2106 to check whether close characteristic amount is present or not. The pattern dictionary 2113 is consisted of a dictionary item number region holding the item number included, and pattern dictionary item more than or equal to 0 as shown in Fig. 30. Furthermore, the pattern dictionary item is consisted of a characteristic amount region holding the characteristic amount and an object identification number region. In the shown embodiment, as the object identification number stored in the object identification number region, natural number (1, 2, 3, ...) is used.

The object recognizing portion 2107 retrieves the pattern dictionary item having the characteristic amount close to the input characteristic amount, and transfers the object identification number stored in the object identifying number region of the corresponding item to the operation executing portion 2108. When registered pattern having the characteristic amount close to the input characteristic amount is not found, the object recognizing portion 2107 transfers -1 as the object identification number to the operation executing portion 2108.

### (7) Operation Executing Portion

The operation executing portion 2108 is a portion executing the predetermined process on the basis of the object identifying number transferred from the object recognizing portion 2107. The process content will be discussed hereinafter.

When the object identification number is -1, namely when the input object is not the already registered pattern, the operation executing portion 2108 reads out the object image stored in the object holding portion to store in the pattern buffer 2109. At this time, when image already stored in the pattern buffer 2109 is present, newly stored image is added to the right side. The object pattern accumulated in the pattern buffer 2109 is held until used in the later process.

On the other hand, when the object identification number is -1, namely when the input object is not the already registered pattern, the operation executing portion 2108 reads out the pen number held in the process buffer. When the pen number is 0, nothing is done and the pen number is not 0, the process corresponding to the number is executed. The pen number and operation are corresponded by the process table.

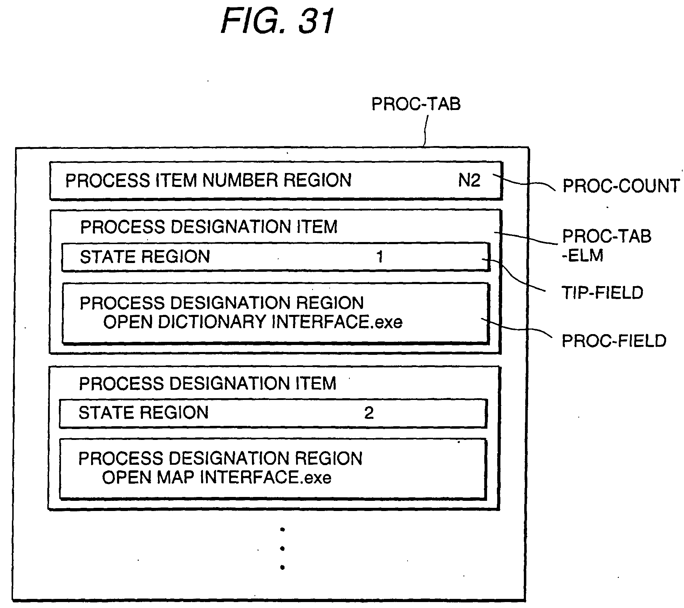

The process table is consisted of a process item number region holding the item number included therein, and greater than or equal to 0 of the process designation items, as shown in Fig. 31. The process designation item is consisted of the state region holding the pen number and the process designation region holding the operation to be executed when the number is set. The operation executing portion 2108 is checks the process corresponding to the number using the process table when the pen number stored in the process designation buffer is not 0.

On the other hand, when the object identification number transferred from the object recognizing portion 2107 is not -1, namely the input pattern is the pattern already registered, the operation executing portion 2108 checks which operation is corresponded to the object identification number to execute the operation.

The operation table is consisted of operation item number region holding item number included therein and more than or equal to 0 of operation designation item. The operation designation item is consisted of the object number region holding the object identification number and the operation region holding the operation to be executed upon detection of the object.

The operation executing portion 2108 checks whether operation designation item having the number the same as the object identification number given from the object recognizing portion 2107 is present in the operation table. If present, the operation region of the corresponding operation designation item is read out and executed.

Operation which the operation executing portion 2108 may execute, is OPEN operation, for example. When the operation to be executed by the operation executing portion 2108 is OPEN, the operation executing portion 2108 at first stores the pattern stored in the pattern buffer 2109 in a pattern image file of a given name (e.g. "patterns.bmp). Next, referring a file name or a program name stored following to the operation name OPEN, file is opened or program is triggered.

The program activated by the operation executing portion 2108 may read the pattern image file and is used in arbitrary process. For example, image stored in the pattern image file is regarded as character string to attempt character recognition. Also, the program to be triggered by the operation executing portion may use arbitrary function of the information processing apparatus. For example, it may be possible to call a function encyclopedia program or a function of a map program loaded in the information processing apparatus 102.

By combining the foregoing, as a program to be triggered from the operation executing portion 2108, a program to perform character recognition of the content of the pattern buffer 2109 to transfer to the encyclopedia program to display checked meaning, can be realized.

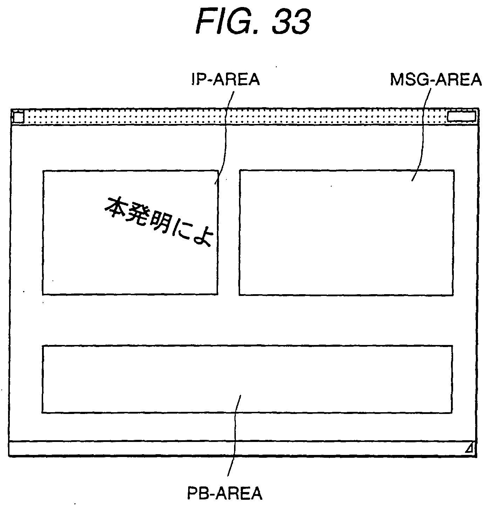

Fig. 33 shows one example of a screen image displayed on the display 105 of the information processing apparatus for implementing the present invention. The image which the user inputs by means of the video pen 103, is displayed in a process step displaying region. In the process step display region, step of processing the input image may be displayed. The right side of the process step display region, is a system message region. The message from the information processing apparatus to the user is displayed in this region. On the lower side of the screen, there is a pattern buffer region. In the pattern buffer region, the process object which the user pointed by means of the video pen 103, and the information processing apparatus 102 stores temporarily, is stored.

With the present invention, object can be input by natural operation. On the other hand, number of operations of the user can be reduced significantly. Furthermore, it can prevent repeated erroneous object pointing method by the user to cause disturbance.

## Claims

1. A pen type input device with a camera including a pen and a camera mounting on said pen and picking-up an image of a penpoint, wherein
said camera is mounted on said pen so that a center position of the image picked up by said camera is located at left side of the tip end of said pen.

2. A pen type input device with a camera including a pen and a camera mounting on said pen and picking-up an image of a penpoint, wherein
said camera is mounted on said pen so that a center position of the image picked up by said camera is located at right side of the tip end of said pen.

3. A pen type input device with a camera as set forth in claim 1 or 2, wherein said camera is mounted on said pen so that said camera may pivot relative to said penholder within a range at least 0 to 90°.

4. A pen type input device with a camera including a pen, a camera mounting on said pen and picking-up an image of a penpoint, and an information processing apparatus performing process of an image picked up said camera, wherein
said information processing apparatus makes judgment of an orientation of an objective image picked up by said camera depending upon a position of a tip end of said pen in the image picked-up by said camera.

5. A pen type input device with a camera including a pen, a camera mounting on said pen and picking-up an image of a penpoint, and an information processing apparatus performing process of an image picked up said camera, wherein
said information processing apparatus extracts an object to be processed from an image picked up by said camera, determines a process to be executed from the picked-up image, and performs process of said extracted object.

6. A pen type input device with a camera as set forth in claim 5, wherein said information processing apparatus determines a process to be executed on the basis of a color picked up by said camera.

7. A pen type input device with a camera including a pen, a camera mounting on said pen and picking-up an image of a penpoint, and an information processing apparatus performing process of an image picked up said camera, wherein
said information processing apparatus detects position of said object extracted from the image picked up by said camera and said penpoint to display an image indicating pointing of the pen on the basis of the result of detection.

8. A pen type input device with a camera as set forth in claim 7, wherein said information processing apparatus displays an image indicating of pointing of the pen when images in which said extracted object and said penpoint overlap for a times greater than or equal to a predetermined times.

9. A pen type input device with a camera including a pen, a camera mounting on said pen and picking-up an image of a penpoint, and an information processing apparatus performing process of an image picked up said camera, wherein
said information processing apparatus extracts a standard pattern picked up by said camera and extracts an object by correcting an image picked up on the basis of a result of extraction.
